Europäisches Patentamt

(19) European Patent Office

Office européen des brevets

(11) Publication number: **0 018 370**
**B1**

(12) **EUROPEAN PATENT SPECIFICATION**

(45) Date of publication of patent specification: **03.03.82**

(51) Int. Cl.³: **F 16 J 15/32** //B63H23/36

(21) Application number: **79900398.3**

(22) Date of filing: **17.04.79**

(86) International application number:
**PCT/GB79/00061**

(87) International publication number:
**WO 79/00943 15.11.79 Gazette 79/23**

(54) **ANNULAR SEAL.**

<table>
<tr><td>

(30) Priority: **18.04.78 GB 1522378**

(43) Date of publication of application:
**12.11.80 Bulletin 80/23**

(45) Publication of the grant of the patent:
**03.03.82 Bulletin 82/9**

(84) Designated Contracting States:
**CH DE FR GB LU SE**

(56) References cited:
**DE - B - 1 283 534**
**DE - C - 864 344**
**FR - A - 2 122 222**
**US - A - 3 120 960**

</td><td>

(73) Proprietor: **THE GLACIER METAL COMPANY LIMITED**
**368 Ealing Road, Alperton**
**Wembley, Middlesex HA0 1HD (GB)**

(72) Inventor: **HILL, Alfred**
**"Callerton", 148b Abbots Road**
**Abbots Langley Hertfordshire (GB)**
Inventor: **BAKER, George Robert**
**2, Hamilton Avenue Pyrford**
**Woking, Surrey (GB)**

(74) Representative: **Arthur, George Fitzgerald et al**
**KILBURN & STRODE 30, John Street**
**London WC1N 2DD (GB)**

</td></tr>
</table>

Courier Press, Leamington Spa, England.

# Annular seal

This invention relates to annular seals against the flow of fluid along a shaft, for example for a marine propeller shaft where it is necessary to provide seals against the entry of sea water, and against the escape of lubricating oil from a bearing housing in either direction along the shaft.

British Patent Specification No. 1478273 (Howaldtwerke) teaches an annular seal in the form of an elastomeric member but such a seal has been capable of sufficient deformation due to pressure differences across it to displace it from its correct sealing position, and to cause it to rub on the shaft causing losses.

French Patent Specification No. 2,122,222 (Freudenberg) shows an annular seal between a rotatable shaft and a housing. The seal includes a rigid bearing ring in which the shaft rotates and a series of flexible sleeves which are fixed to the ring. Those sleeves which are positioned relatively more outwards radially support the ring from the housing while those which are positioned relatively more inwards radially have a sealing contact lip in contact with the shaft.

It is an object of the present invention to provide a shaft seal which can accommodate what is effectively non-concentricity of the shaft about its axis of rotation, possibly due to whirling load or to static loads.

According to the present invention, there is provided an annular seal between a rotatable shaft and a surrounding housing to prevent the flow of fluid along the shaft, comprising a rigid ring and sleeves which are flexible relative to the ring and which are respectively radially inwards and outwards of the ring, one of the sleeves being adapted to be connected to the shaft or housing while the other carries a sealing contact lip arranged to lie against the housing or shaft in use; the radially inner sleeve including a portion spaced radially from the shaft and the radially outer sleeve including a portion spaced radially from the housing, the sleeves being capable of deformation to permit variation of the radial clearance at any point between the shaft and the housing during rotation of the shaft without losing the sealing contact at the lip, characterised in that the ring is movable relative to the shaft in a radial direction.

In accordance with the present invention, the rigid ring will be substantially undeformed in use, and that ring can conveniently be located in one axial direction against a support on the mounting, so that the inner and outer sleeves tend not to distort sufficiently to impair the efficiency of the seal.

Conveniently, one or each of the radially inner and outer flanges extends from the rigid ring in a direction having a substantial component parallel with the axis of the shaft, so that radial flexing is possible against little resistance even though axial location is provided between the relatively rigid ring and the support on the mounting.

The annular seal may comprise a flexible sleeve with a reinforced bead at its radially inner or outer edge, which bead may be engaged in an annular groove in a housing, the groove having a neck for the sleeve which neck is about the same width as the reinforcement within the bead to prevent removal of the bead from the groove. The bead is conveniently moulded around the reinforcement which may be a circumferentially extending metal or plastics wire, or a circumferentially extending metal or plastics helical coil. The groove may be defined between two mounting components one of which is assembled with the other, after the reinforced bead has been located, and then conveniently the groove has three surfaces pressing on the bead which surfaces are distributed around the reinforcement.

The invention may be carried into practice in various ways, and certain embodiments will now be described by way of example, with reference to the accompanying drawings of which:—

Figure 1 is a sketch of a horizontal section through a part of a previously proposed annular shaft seal;

Figures 2, 3 and 4 are sketches corresponding to Figure 1 of annular seals embodying the invention;

Figure 5 (a), (b) and (c) are sketches showing one way of engaging a reinforced bead on the annular seal in a mounting groove; and

Figure 6, (a) and (b) are sketches showing a different form of reinforced bead on the annular seal.

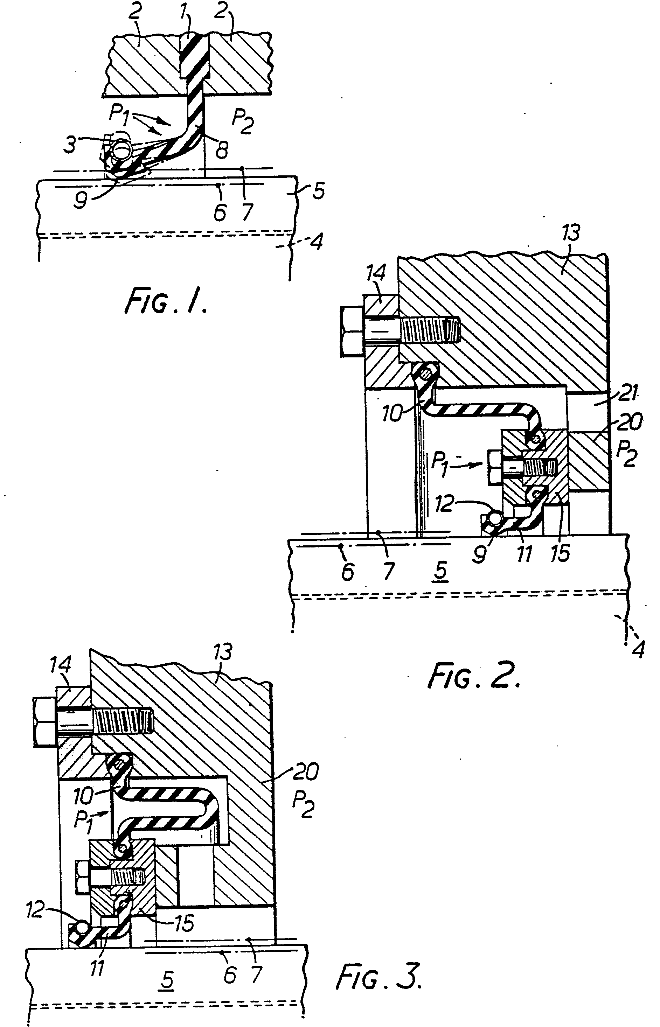

In the type of annular lip seal shown in Figure 1, a marine propeller shaft 4 has a surrounding collar 5 and rotates within a cylindrical housing 2, which may be part of the ship's hull.

In order to prevent flow of fluid along the annular space between the housing and the collar 5, an annular seal blocks that space, and that consists of a radially outer thick rim 1 engaged in a groove in the mounting 2, a diaphragm part 8 extending radially inwardly, and then axially to a sharp lip 9 at its inner end which rubs on the shaft, as the shaft rotates to effect the seal. A coil spring 8 extending annularly around the part of the diaphragm opposite the lip 9 holds the lip against the shaft. The bend in the diaphragm is designed to be towards the area of higher pressure $P_1$ and away from the area of lower pressure $P_2$.

Difficulties with that type of seal can arise due to the shaft surface being apparently eccentric about the axis of rotation, the two limiting positions being indicated in Figure 1 at 6 and 7. That apparent eccentricity can cause leakage of fluid through the seal if the seal cannot flex easily to accommodate it, but if flexure of the seal is too easy, then an excessive difference in pressure between $P_1$ and $P_2$ can deform the diaphragm part 8 of the seal, and that can have the effect of lifting the lip 9, or bringing the rear surface of the diaphragm into contact with the shaft collar 5, to cause substantially increased frictional losses during rotation.

These disadvantages are overcome in accordance with the design of Figure 2, which has essentially three components, namely a rigid ring 15, and separate radially outer and radially inner elastomeric sleeves 10 and 11.

The outer sleeve 10 has reinforced radially outer and radially inner beads engaged in respective grooves in the surrounding housing 13, and in the rigid ring 15. The main part of the outer sleeve 10 extends as a cylinder generally parallel with the axis of the shaft.

The inner sleeve is similarly supported at its radially outer edge from the ring 15, and it also extends generally parallel with the shaft axis, but for an axial distance only about half that of the outer sleeve 10, and it has at its lower edge the conventional sealing lip 9 urged against the surface of the shaft collar 5 by a coil spring 12.

The housing 13 has a radially inwardly extending flange 20 providing an axial locating surface for the ring 15, but the flange 20 is apertured at 21 so that the low pressure $P_2$ has access to the face of the outer sleeve 10.

The ring 15 is of metal or of a plastics material which is rigid relative to the elastomeric material of the sleeves 10 and 11, and so does not distort in response to substantial pressure differences between $P_1$ and $P_2$, and indeed it is axially located against the flange 20. It is however free to move radially due to flexure of the sleeves 10 and 11 in the most favourable direction due to their principal lengths being parallel with the shaft axis.

Thus, variations in the position of the surface of the collar 5, as shown at 6 and 7, are easily accommodated by flexing of the inner sleeve 11, and there is no tendency to distort the seal so that the surface of the sleeve 11 leading to the lip 9 comes into contact with the surface of the collar 5.

The inner sleeve 11 conveniently includes wear resistant compounds which reduce the wear as sliding occurs between the lip and the collar at the expense of some loss in the flexibility of the material. A preferred wear resistant compound consists of from 50% to 70% P.T.F.E. by volume, from 10% to 30% graphite by volume, and from 10% to 30% bronze by volume. This mixture may be in the form of a mixed powder present in a proportion of between 5% and 30% in a nitrile rubber or plastics or other elastomer stable in sea and fresh water.

In the modification shown in Figure 3 the outer sleeve 10 is of convoluted form with a first part extending axially in one direction and a second part extending axially in the other direction so that the two reinforced beads are axially in line with one another.

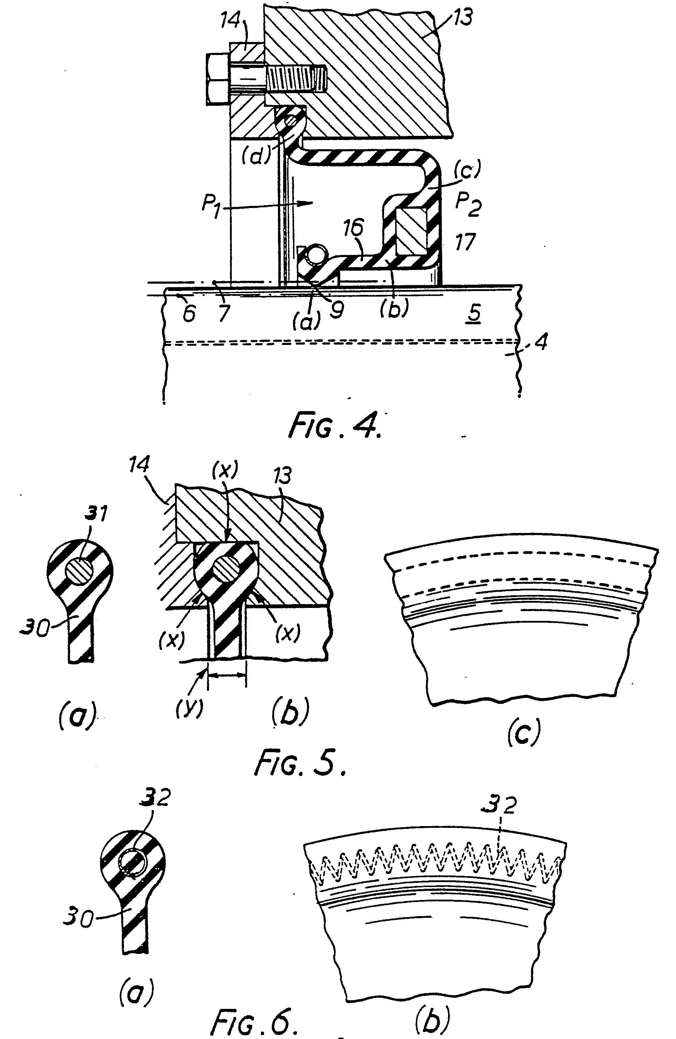

In the modification shown in Figure 4, instead of having an external rigid ring 15 clamped to inner and outer sleeves 10 and 11, the two sleeves are formed by a common annular diaphragm of elastomeric material, as indicated at 16 which is moulded around a relatively rigid plastics or metal reinforcing ring 17. It is possible in that embodiment for the wear resisting compound to be included only in the part of the diaphragm between the ring 17 and the lip 9.

Figure 5 shows how any of the radially inner or outer edges of a sleeve can be in the form of a bead 30 moulded around an edge reinforcement shown in Figure 5a as a circumferential metal wire 31 of circular cross section. That can easily be engaged in an annular groove defined between co-operating edges of the housing 13, and an end flange 14 bolted to it as shown in Figures 2 and 3. The cross section of the groove consists of a main part in the form of a rectangle with a neck leading to it by way of a pair of outwardly inclined sides, so that the walls of the groove press on the external surface of the bead 30 at the three points indicated at $x$ in Figure 5b namely at the two inclined sides and the opposite faces of the rectangular portion. The neck has a width indicated at $y$ in Figure 5b which may be between $2\frac{1}{2}$ and 2/3 times the diameter of the wire reinforcement 31, but is preferably approximately equal to it, so that once the end flange 14 has been bolted to the mounting 13, it is not possible to displace the flange rim from the mounting.

An alternative form of reinforcement shown in Figure 6a and b is of metal or plastics wire in the form of a helical coil 32 extending circumferentially around the edge of the flange in order to permit some circumferential flexibility to enable the bead to be easily fitted in the groove while the bead is rather stronger than in Figure 5 because of the continuous elastomeric material around the coils of the helix.

The flange 20 of Figures 2 and 3 could be used also in the embodiment of Figure 4, but it is not essential in all applications, and particularly in the moulded arrangement of Figure 4.

In all the embodiments specifically described, the outer sleeve 10 is more flexible than the inner sleeve 11, whether by choice of the material or by design of the lengths and thicknesses of the sleeves. The inner sleeve 11 only needs to flex enough to maintain the seat at 9, whereas relative movement between the shaft and the housing is largely accommodated by the outer sleeve 10.

**Claims**

1. An annular seal between a rotatable shaft (4) and a surrounding housing (13) to prevent the flow of fluid along the shaft (4), comprising a rigid ring (15) and sleeves (11), (10) which are flexible relative to the ring (15) and which are respectively radially inwards and outwards of the ring (15), one of the sleeves (10, 11) being adapted to be connected to the shaft (4) or housing (13) while the other carries a sealing contact lip (9) arranged to lie against the housing (13) or shaft (4) in use; the radially inner sleeve (11) including a portion spaced radially from the shaft (4) and the radially outer sleeve (10) including a portion spaced radially from the housing (13), the sleeves (10, 11) being capable of deformation to permit variation of the radial clearance at any point between the shaft (4) and the housing (13) during rotation of the shaft (4) without losing the sealing contact at the lip (9), characterised in that the ring (15) is movable relative to the shaft (4) in a radial direction.

2. A seal as claimed in Claim 1 characterised in that the outer sleeve (10) has greater radial flexibility than the inner sleeve (11).

3. A seal as claimed in Claim 1 or Claim 2 characterised in that the inner and outer sleeves (10, 11) are of elastomeric material.

4. A seal as claimed in Claim 2 or Claim 3 characterised in that at least the radially inner sleeve (11) contains wear resisting compound.

5. A seal as claimed in Claim 4 characterised in that the wear resisting compound includes PTFE and/or graphite and/or bronze.

6. A seal as claimed in Claim 5 characterised in that the wear resisting compound comprises 50% and 70% by volume of PTFE, between 10% and 30% by volume of graphite, and between 10% and 30% by volume of bronze.

7. A seal as claimed in any of the preceding claims characterised in that the radially inner and outer sleeves (10, 11) are parts of a single piece of elastomeric material which is moulded around the rigid ring.

8. A seal as claimed in any of Claims 1—6 characterised in that the ring (15) is clamped to the inner edge of the outer sleeve (10) and to the outer edge of the inner sleeve (11).

9. A seal as claimed in any of the preceding claims characterised in that the outer sleeve (10) is axially longer than the inner sleeve (11).

10. A seal as claimed in any of the preceding claims characterised in that the/or each sleeve (10, 11) extends with a substantial component parallel with the shaft (4) axis.

11. A seal as claimed in any of the preceding claims characterised in that it includes a support on the housing (13) for locating the rigid ring (15) in one axial direction.

12. A seal as claimed in any of the preceding claims having a flexible flange (30) with a reinforced bead (31, 32) at its radially outer edge which bead is engaged in an annular groove in the mounting, the groove having a neck for the flange which neck is about the same width as the reinforcement of the bead.

### Patentansprüche

1. Ringdichtung zwischen einer drehbaren Welle (4) und einem umgebenden Gehäuse (13) zur Verhinderung des Flüssigkeitsaustritts entlang der Welle (4), bestehend aus einem starren Ring (15) und Manschetten (11, 10), welche gegenüber dem Ring (15) flexibel sind und sich innerhalb bzw. außerhalb des Rings (15) befinden, wobei eine der Manschetten (10, 11) mit der Welle (4) oder dem Gehäuse (13) verbunden ist, während die andere eine dichtende Kontaktkante (9) aufweist, derart, daß sie bei Betrieb der Anlage an dem Gehäuse (13) bzw. der Welle (14) anliegt, die radial innenliegende Manschette (11) einen radial im Abstand von der Welle (4) liegenden Teil und die radial äußere Manschette (10) einen radial im Abstand vom Gehäuse (13) liegenden Teil aufweist, wobei die Manschetten (10, 11) einer Deformation zur Veränderung des radialen Schlitzes an jedem Punkt zwischen Welle (4) und Gehäuse (13) während der Drehung der Welle (4) gestatten, ohne daß der dichtende Kontakt an der Kante (9) verlorengeht, dadurch gekennzeichnet, daß der Ring (15) in Radialrichtung relativ zur Welle (4) bewegbar ist.

2. Ringdichtung nach Anspruch 1, dadurch gekennzeichnet, daß die äußere Manschette (10) eine größere radiale Flexibilität als die innere Manschette (11) besitzt.

3. Ringdichtung nach Anspruch 1 oder 2, dadurch gekennzeichnet, daß die Manschetten (10 und 11) aus einem elastomeren Werkstoff bestehen.

4. Ringdichtung nach Anspruch 2 oder 2, dadurch gekennzeichnet, daß zumindest die radial innere Manschette (11) aus einem verschleißbeständigen Werkstoff besteht.

5. Ringdichtung nach Anspruch 4, dadurch gekennzeichnet, daß der verschleißbeständige Werkstoff Polytetrafluoräthylen und/oder Graphit und/oder Bronze enthält.

6. Ringdichtung nach Anspruch 5, dadurch gekennzeichnet, daß der verschleißbeständige Werkstoff 50 bis 70 Vol.-% Polytetrafluoräthylen, 10 bis 30 Vol.-% Graphit und 10 bis 30 Vol.-% Bronze enthält.

7. Ringdichtung nach einem der Ansprüche 1 bis 6, dadurch gekennzeichnet, daß die Manschetten (10, 11) Teile eines einzigen Stücks eines elastomeren Werkstoffs sind, der um den starren Ring geformt ist.

8. Ringdichtung nach einem der Ansprüche 1 bis 6, dadurch gekennzeichnet, daß der Ring (15) mit der Innenkante der äußeren Manschette (10) und der Außenkante der inneren Manschette (11) verbunden ist.

9. Ringdichtung nach einem der Ansprüche 1 bis 8, dadurch gekennzeichnet, daß die äußere Manschette (10) in Achsrichtung länger ist als die innere Manschette (11).

10. Ringdichtung nach einem der Ansprüche 1 bis 9, dadurch gekennzeichnet, daß die Manschette(n) (10, 11) sich mit einem wesentlichen Teil parallel zu der Achse der Welle (4) erstreckt (erstrecken).

11. Ringdichtung nach einem der Ansprüche 1 bis 10, dadurch gekennzeichnet, daß eine Halterung am Gehäuse (13) für die Fixierung des starren Rings (15) in einer Axialrichtung vorgesehen ist.

12. Ringdichtung nach einem der Ansprüche 1 bis 11, dadurch gekennzeichnet, daß ein flexibler Flansch (3) mit einem verstärkten Wulst (31, 32) an der radial äußeren Kante vorgesehen ist und der Wulst eingreift in eine Ringnut im Aufbau, welche einen Ansatz für den Flansch besitzt und der Ansatz etwa die gleiche Breite wie die Versteifung des Wulstes aufweist.

## Revendications

1. Un joint d'étanchéité annulaire entre un arbre rotatif (4) et un logement environnant (13) pour empêcher l'écoulement de fluide le long de l'arbre (4), comprenant une bague rigide (15) et des manchons (11), (10) qui sont flexibles par rapport à la bague (15) et qui sont situés respectivement radialement à l'intérieur et radialement à l'extérieur de la bague (15), l'un des manchons (10, 11) étant adapté pour être raccordé à l'arbre (4) ou au logement (13) tandis que l'autre porte une lèvre de contact d'étanchéité (9) agencée pour être en appui contre le logement (13) ou l'arbre (4) en service, le manchon radialement intérieur (11) comportant une partie espacée radialement de l'arbre (4) et le manchon radialement extérieur (10) comportant une partie espacée radialement du logement (13), les manchons (10, 11) étant capables de se déformer pour permettre une variation du jeu radial à un point quelconque entre l'arbre (4) et le logement (13) pendant la rotation de l'arbre (4) sans perdre le contact d'étanchéité au niveau de la lèvre (9), caractérisé en ce que la bague (15) est mobile par rapport à l'arbre (4) dans une direction radiale.

2. Un joint d'étanchéité tel que revendiqué dans la revendication 1, caractérisé en ce que le manchon extérieur (10) a une plus grande flexibilité radiale que le manchon intérieur (11).

3. Joint d'étanchéité tel que revendiqué dans la revendication 1 ou la revendication 2, caractérisé en ce que les manchons intérieur et extérieur (10, 11) sont en matière élastomère.

4. Un joint d'étanchéité tel que revendique dans la revendication 2 ou la revendication 3, caractérisé en ce qu'au moins le manchon radialement intérieur (11) contient un composé résistant à l'usure.

5. Un joint d'étanchéité tel que revendiqué dans la revendication 4, caractérisé en ce que le composé résistant à l'usure comporte du P.T.F.E. et/ou du graphite et/ou du bronze.

6. Un joint d'étanchéité tel que revendiqué dans la revendication 5, caractérisé en ce que le composé résistant à l'usure comprend de 50 % et 70 % en volume de P.T.F.E. entre 10 % et 30 % en volume de graphite et entre 10 % et 30 % en volume de bronze.

7. Un joint étanchéité, tel que revendiqué dans l'une quelconque des revendications précédentes, caractérisé en ce que les manchons radialement intérieur et extérieur (10, 11) font partie d'une unique pièce de matière élastomère qui est moulée autour de la bague rigide.

8. Un joint d'étanchéité tel que revendiqué dans l'une quelconque des revendications 1 à 6, caractérisé en ce que la bague (15) est fixée par pincement sur le bord intérieur du manchon extérieur (10) et sur le bord extérieur du manchon intérieur (11).

9. Un joint d'étanchéité tel que revendiqué dans l'une quelconque des revendications précédentes, caractérisé en ce que le manchon extérieur (10) est axialement plus long que le manchon intérieur (11).

10. Un joint d'étanchéité tel que revendiqué dans l'une quelconque des revendications précédentes, caractérisé en ce que le/ou chaque manchon (10, 11) s'étend avec une importante composante parallèle à l'axe de l'arbre (4).

11. Un joint d'étanchéité tel que revendiqué dans l'une quelconque des revendications précédentes, caractérisé en ce qu'il comporte un support sur le logement (13) pour positionner la bague rigide (15) dans une direction axiale.

12. Un joint d'étanchéité tel que revendiqué dans l'une des revendications précédentes, ayant un rebord flexible (30) muni d'un bourrelet de renforcement (31, 32) à son bord radialement extérieur, bourrelet qui est engagé dans une rainure annulaire formée dans la monture, la rainure ayant un rétrécissement pour le rebord, rétrécissement qui a environ la même largeur que le renforcement du bourrelet.

**0 018 370**

*FIG.1.*

*FIG.2.*

*FIG.3.*

0018 370

FIG. 4.

FIG. 5.

FIG. 6.

2